# EUROPEAN PATENT SPECIFICATION

(11) **EP 3 657 942 B1**
(45) Date of publication and mention of the grant of the patent: **31.08.2022**
(21) Application number: 18759172.2
(22) Date of filing: 20.07.2018
(51) Int. Cl.: A01N 1/02, B01L 3/00, B65D 79/02, F25D 17/06, F25D 17/08

(54) **CONTAINER FOR CONTAINING PERISHABLE GOODS**
BEHÄLTER ZUR AUFNAHME VON VERDERBLICHEN GÜTERN
RÉCIPIENT DESTINÉ À CONTENIR DES MARCHANDISES PÉRISSABLES

(30) Priority: 24.07.2017 IT 201700084270
(43) Date of publication of application: 03.06.2020
(73) Proprietor: Sefero S.r.l., 16156 Genova (IT)
(72) Inventor: BORASO, Roberto, 16156 Genova (IT); BORASO, Luca, 16035 Rapallo (GE) (IT); GRISONI, Claudio, 00151 Roma (IT); LEONFORTE, Antonio, 000167 Roma (IT)
(74) Representative: Bottino, Giovanni
(86) International application number: PCT/IB2018/055417
(87) International publication number: WO 2019/021132

(56) References cited:
- EP-A1- 2 870 420
- WO-A1-2015/120911
- GB-A- 2 522 940
- US-A1- 2005 034 477
- US-B1- 6 209 343

## Description

The present invention relates to a container for transport of biological samples or other materials, such as drugs, vaccines, blood transfusion bags and vials in general or other perishable goods such as food or beverages under controlled temperature.

The container comprises a housing compartment for goods, delimited by one or more side walls and having at least one opening.

At least one intermediate wall is provided inside said housing compartment and is adapted to divide the housing compartment into at least two sections.

The invention mainly relates to transport of perishable goods and the containers for transporting them.

Namely, the invention is directed to specific types of goods that require particular care and attention during transport and whose transport conditions must be monitored.

These goods encompass all perishable goods, such as food and biological material.

It shall be understood that monitoring of transport conditions is essential to ensure the integrity of the transported goods.

Furthermore, the provision of a container that affords constant characteristics and quality of perishable goods can solve prior art problems in various technical fields.

For example, food goods must be maintained within a given temperature range, and must not be exposed to excessive stress during transport, which is a particularly important requirement, for instance, when shipping sparkling wines.

An important case of transportation of perishable goods is the transportation of biological material.

In recent times, medical testing has been increasingly centralized in large laboratories and structures that can test increasingly great amounts of biological samples collected from a large number of collection centers distributed over large geographic areas.

Since testing is no longer carried out locally, the biological sample that has been locally collected must be delivered to central laboratories in a safe and controlled manner.

This aspect has become of critical importance to ensure not only reliable testing, but also safety of the population, e.g. by preventing the loss of infected samples, and ensuring efficiency and certification of the whole testing process.

As discussed above, the samples may be damaged due to exposure to excessively high temperatures.

Prior art sample transportation systems cannot meet the above described requirements.

Particularly, prior art containers for biological materials have passive cooling systems, having much the same construction as refrigerated beverage containers.

Prior art containers have a heat-absorbing device fitted therein, which can only cool the housing compartment, but cannot maintain temperature whithin a desired range.

The possibility of maintaining temperature within a desired range is a critical feature, because overcooling potentially has the same hazards as overheating.

Therefore, there arises the need to ensure that each biological sample will be treated, during transportation, in such a manner as to ensure given quality standards for testing.

Prior art transportation devices cannot effectively counteract the harmful effects of transport under poor care or problematic environmental conditions, i.e. a car driving in heavy traffic in the sun, on the samples.

Therefore, there is a need, yet unfulfilled in prior art devices, for a container for transport of perishable material, that can ensure proper maintenance of temperature, by active and effective monitoring thereof. Document EP2870420 discloses a container including all the technical features of the preamble of claim 1.

The present invention fulfills the above objects by providing a container as described above, in which the intermediate wall has at least one vent pipe element comprising a higher opening connected to a lower opening through a duct, such that the lower port communicates with one section and the upper port to communicate with the other section.

Furthermore, the vent pipe element comprises at least one fan adapted to create a forced-air flow from the upper opening to the lower opening and vice versa, such that the forced-air flow provides constant temperatures for the samples while they are being transported.

Like in prior art containers, a heat-absorbing device, such as one or more eutectic plates, is provided in either section.

Preferably, the heat-absorbing device is placed in one section such that it will not contact the transported samples.

The presence of the heat-absorbing device can provide a temperature gradient between the at least two sections, having a synergistic effect with the forced-air flow, thereby cooling or heating the section that does not contain the heat-absorbing device.

Transport temperatures, which may be selected by a user, as explained below, are obtained by means of the air flow that can ensure a constant temperature due to the eutectic plates that do not contact the samples as they are being transported or held in the housing compartment.

The selected temperatures may preferably range from +4°C to +37°C, as needed by the customer or as required for the goods being transported.

As described below, by adjusting the direction and speed of rotation of the fan the goods or products contained in the housing compartment may be cooled or heated.

The presence of the vent pipe element and this peculiar configuration will form an intermediate wall, acting as a partition member between at least two sections, and having variable resistance and heat capacity.

The intermediate wall provides an active solution and a passive solution to maintain a given temperature level.

The active solution is given by the movement of the fans, whereas the passive solution is provided by the vent pipe: with the fan idle, an air seal, having an insulating function, is created in the vent pipe element, due to the temperature gradient.

In a preferred embodiment, the intermediate wall has at least two vent pipe elements, such that the upper opening of one vent pipe element will communicate with the section that is in communication with the lower opening of the other vent pipe element.

As explained below, four vent pipe elements are provided.

Irrespective of the number of the vent pipe elements, their alternate arrangement, i.e. with the upper and lower openings alternately connected to the at least two sections, will provide an advantageous air circulation, which will reverse its direction in response to cooling or heating needs.

As mentioned above, the movement of the fans is an active solution to maintain temperature, whereby such solution is preferably actively controlled by providing a fan actuation and adjustment unit, which communicates with a temperature sensing unit.

As explained below, such solution is advantageous in combination with the provision of a management unit, in which the desired temperature is set, the temperature of the housing compartment is read by the temperature sensing unit and is compared with the desired temperature, and the movement of the fan is accordingly adjusted.

Advantageously the temperature sensing unit comprises means for sensing air temperature at the upper opening and/or the lower opening.

Detection of the air flow in and out of the vent pipe element will afford both adjustment of the desired temperature and assessment of the effective duration of the heat-absorbing device, i.e. its cooling capacity.

This is simply obtained by determining the temperature gradient in and out of the vent pipe element.

According to a possible embodiment, the actuation and adjustment unit is integrated in the intermediate wall.

Thus, the actuation and adjustment unit integrated in the intermediate wall, can have a self-standing operation and be programmed to move the fans such that a given temperature level will be maintained.

Alternatively, the actuation and adjustment unit may be arranged within the side walls of the container or in a cover, if there is one, and may control the fans with which it is connected.

Also alternatively, the operation of the actuation and adjustment unit may be designed to be supervised by a control and management unit.

This control and management unit may be provided inside a cover, if any, or fitted into the side walls of the container.

Alternatively, the control unit may be integrated in the intermediate wall.

Likewise, the above discussed temperature sensing unit and management unit may be also designed to be integrated in the intermediate wall.

Also, according to a further embodiment, the intermediate wall is not fixed, but may be removably fastened to the container, such that it may take different positions, according to the size requirements of the housing compartment.

For this reason, the intermediate wall advantageously the has means allowing it to be removably fastened to the one or more side walls of the container.

The container of the present invention may thus have a smart intermediate wall and also, alternative or in addition thereto, a smart cover, which allows not only selection of the temperature level, but also recognition of the products in the housing compartment, by comprising means for recognition of such goods.

Also, the cover element may be designed to have means for sensing the temperature within the housing compartment.

According to a possible embodiment, the container of the present invention has a system for safe opening/closing the housing compartment, which system comprises authentication means using codes contained in appropriate smart cards or other user recognition signals.

In one improvement, a plurality of sensors are provided, which are adapted to record various transport conditions, such as temperature, sample movement, moisture, light, geographic position.

For instance, a sensor arrangement may be provided as disclosed in patent applications 102015000081212 and 102015000081233.

According to a further embodiment, a power storage and generation unit may be provided, such as a battery or the like.

The battery may preferably be a rechargeable battery.

The battery may provide power to the intermediate wall and/or of the entire container.

Two or more batteries may be also provided, for powering different components.

It will be appreciated that this battery may be designed to be integrated inside the container, i.e. in the side walls or the cover, and/or in the intermediate wall.

Irrespective of the battery location, connection elements may be provided on the intermediate wall, for data or power transmission from the intermediate wall to the container and vice versa.

According to a further embodiment, the container of the present invention includes means for connection and interface with a power generation network.

For example, these means may consist of plugs for connection to the cigar lighter socket of the car or van that transports the container.

Advantageously at least one storage unit may be provided, for storing the data detected by said plurality of sensors.

Thus, the data detected by the sensors may be stored even when no data communication and transmission systems are provided.

According to an improvement, means may be provided for real-time transmission/reception of the data detected by the plurality of sensors to/from a remote unit.

In addition to this feature, at least one interface is provided for communication with one or more remote units, such that the remote units may set the operating conditions of the container.

Again, the storage unit and/or the transmit/receive unit may be designed to be integrated in the intermediate wall and/or in the container.

According to further variant embodiment, mechanical means are provided for opening/closing the housing compartment.

These mechanical means may be used, for example, in case of problems in the electronic opening and closing system due to user recognition errors.

According to an improvement, the container of the present invention comprises at least one control unit for detecting any tamper attempt.

Finally, according to a further variant embodiment, a supervision unit may be provided for detecting the achievement of threshold values by the parameters detected by the plurality of sensors.

In addition to this aspect, it shall be noted that the supervision unit comprises an alarm signal generating unit and a unit for sending said alarm signals to one or more user units.

Concerning the various parts as described above, once again the supervision unit may be designed to be integrated in the intermediate wall and/or in the container.

Due to the above described advantages of the container of the present invention, the present invention also relates to a partition wall which is adapted to be introduced into housing compartments of containers to divide the housing compartment into at least two sections.

Namely, the wall is formed according to one or more of the above described features concerning the intermediate wall of the container of the present invention.

It will be appreciated that the above described advantages also relate to the partition wall.

Furthermore, the partition wall of the present invention may be used with different containers, which generally have standard dimensions, to adapt them to transport of perishable goods.

This will provide a partition wall that can operate independently, control the temperature in the containers, such that "smart" containers will be obtained, with the methods and advantages as described above.

These and other features and advantages of the present invention will appear more clearly from the following description of a few embodiments, illustrated in the annexed drawings, in which:
Fig. 1 shows a schematic of the container of the present invention;
Figs. 2a to 2e show different views of the container of the present invention;
Fig. 3 shows a perspective view of one embodiment of the intermediate wall of the container of the present invention;
Figs. 4A to 4c show three sections, as taken along respective different vertical planes, of the wall of Figure 3.

It shall be noted that the figures annexed to the present patent application, relate to a possible embodiment which is given for an improved understanding of the characteristics and advantages of the container and the partition wall of the present invention.

Therefore, these embodiments shall be intended by way of explanation and without limitation to the inventive concept of the present invention, which consists in the provision of a container for transport of perishable goods that allows proper transport thereof, without temperature jumps.

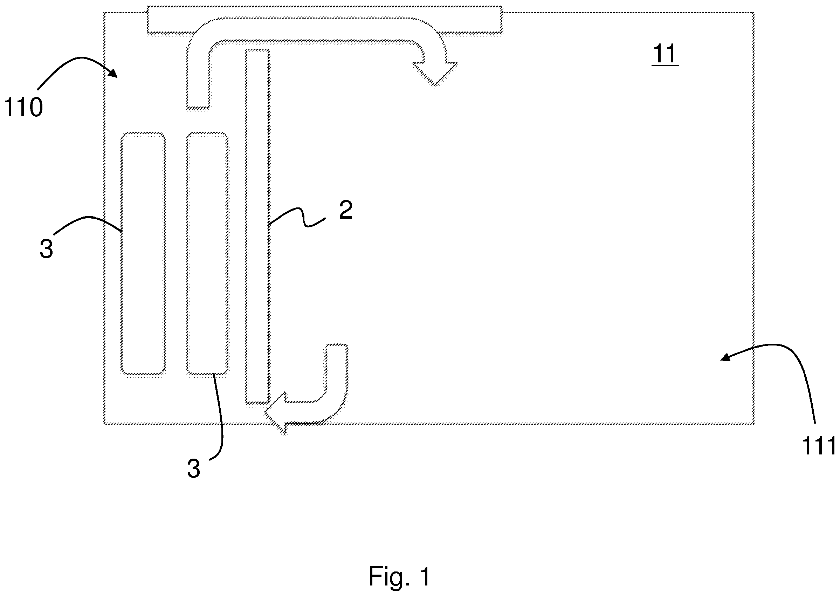

Referring to Figures 1 to 2c, the container of the present invention comprises a housing compartment 11, delimited by one or more side walls 12, and arranged to have at least one opening.

At least one intermediate wall 2 is provided inside the housing compartment 11 and is adapted to divide the housing compartment 11 into at least two sections, particularly one section 110 and one section 111.

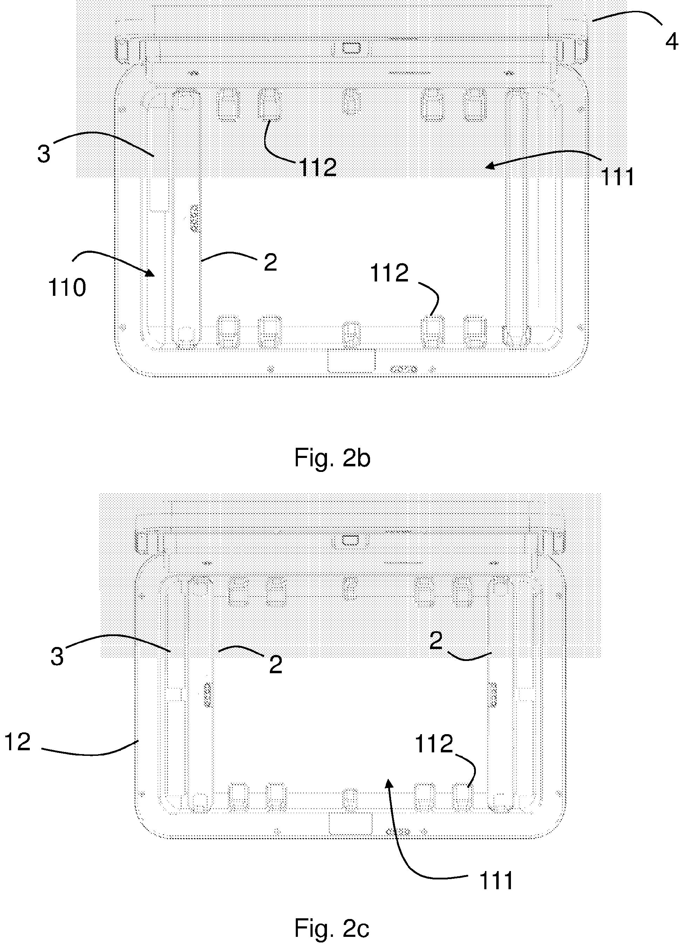

In the variant embodiments as shown in the figures, particularly in Figure 2b, the intermediate wall 2 divides the housing compartment 11 into a "cold" section 110 and a "warm" section 111.

The section 110 is designated as cold due to the presence of the eutectic plates 3 that cool the section.

It will be appreciated below that the intermediate wall 2 shall create a forced air flow to move air from the "cold" section 110 to the "warm" section 111.

Obviously, in the illustrated variant the product in the section 111 is required to be cooled, but the eutectic plates 3 may be replaced, or the air flow may be reversed, for the product in the section 111 to be heated.

In the illustrated variant embodiment, the container has a plurality of elements in the housing compartment 11, for removably fastening the intermediate wall 2.

Particularly, these removable fastening elements consists of guides 112 in which the intermediate wall 2 is fitted.

This configuration allows the dimensions of the two sections 110 and 111 to be increased at will and also allows, as shown in Figure 2c, two intermediate walls 2 to be fitted to form two cold compartments 110 with respective eutectic plates 3.

In Figure 1, the arrows indicate the forced air flow provided by the intermediate wall 2 to cool the products within the housing compartment 11, particularly the section 111.

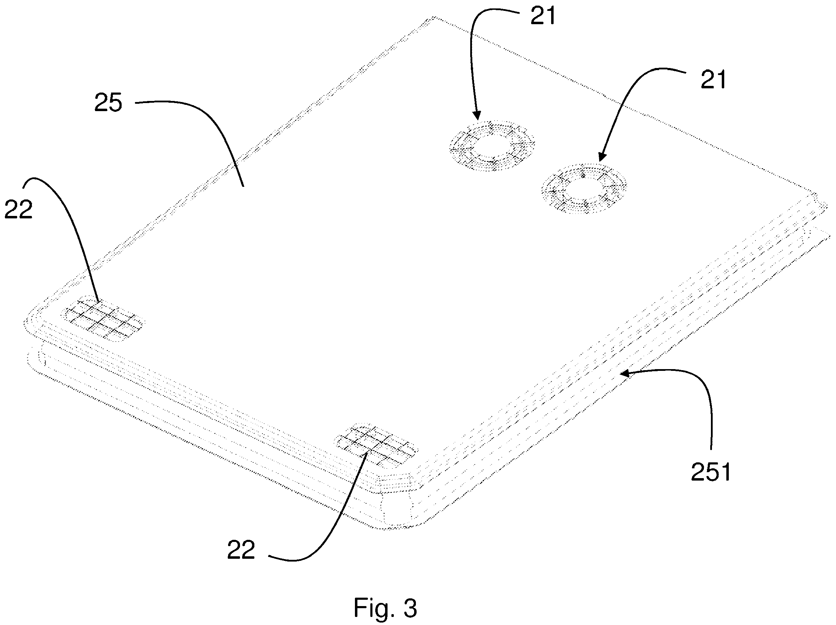

Figures 3 to 4c show that the intermediate wall 2 may create the forced air flow.

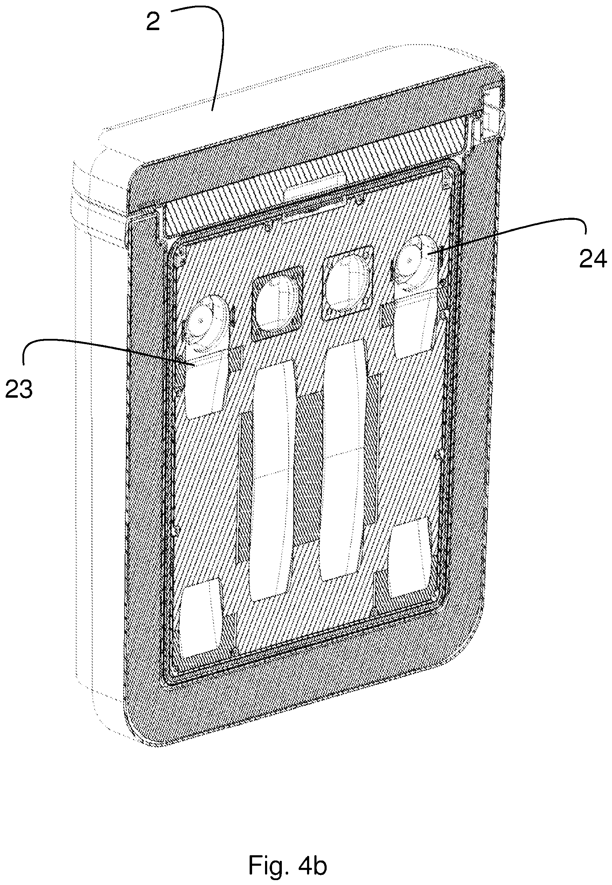

The intermediate wall 2 has four vent pipe elements, as shown in Figure 4b.

In the illustrated variant, four vent pipe elements are provided, but any number of vent pipe elements may be provided.

Irrespective of the selected number, each vent pipe element comprises an upper opening 21, connected to a lower opening 22 through a duct 23, such that the lower opening 22 communicates with one section and the upper opening 21 communicates with the other section.

Furthermore, each vent pipe element comprises at least one fan 24 which is adapted to create a forced air flow from the upper opening 21 to the lower opening 22 and vice versa.

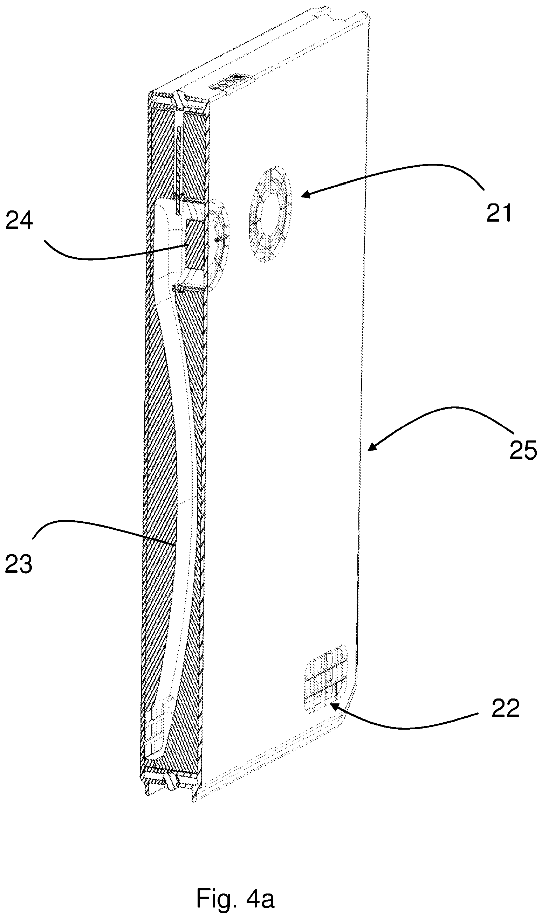

Particularly referring to Figures 3 and 4a, the intermediate wall 2 has four vent pipe elements arranged in such a manner that if the lower openings 22 of the outermost vent pipe elements communicate with the section 110, the upper openings 21 of the vent pipe elements will communicate with the section 111.

In this arrangement, the lower openings 22 of the central vent pipe elements will communicate with the section 111, whereas the upper openings 21 of the same vent pipe elements will communicate with the section 110.

As shown in Figure 4b, the fan 24 is located at the upper openings 21, but for simpler construction it may be located anyway in the vent pipe element.

The forced air flow created by the intermediate wall 2 is now apparent.

Assuming, for instance, that a product in the section 111 is cooled using the cooling capacity of the eutectic plates 3, the actuation of the fans 24 causes warm air to be withdrawn from the section 111 to flow into the section 110, where it is cooled, to be introduced again into the section 111.

Particularly, air is withdrawn from the lower openings 22 which communicate with the section 111, flows through the ducts 23, and is introduced into the section 110 through the upper openings of the same vent pipe elements which had withdrawn air from the section 111.

In the section 110 the air is cooled, is withdrawn from the lower openings 22 which communicate with the section 110 and is introduced into the section 111 through the upper openings 21 of the same vent pipe elements.

The cold air cools the product in the section 111 and is withdrawn again from the lower openings 22 to start a new cycle.

Figure 3 shows a possible embodiment of the intermediate wall 2, in which the vent pipe elements are integrated in an outer casing 25 which has the holes of the lower openings 22 and the upper openings 21 on the larger faces.

Each face is obviously complementary to the others, i.e. each vent pipe element has one hole on one face for the lower opening 22 and one hole on the other face for the upper opening 21.

Furthermore, the outer casing 25 has elements 251 adapted to cooperate with the guides 112 of the housing compartment 11 for removably fastening the intermediate wall 2.

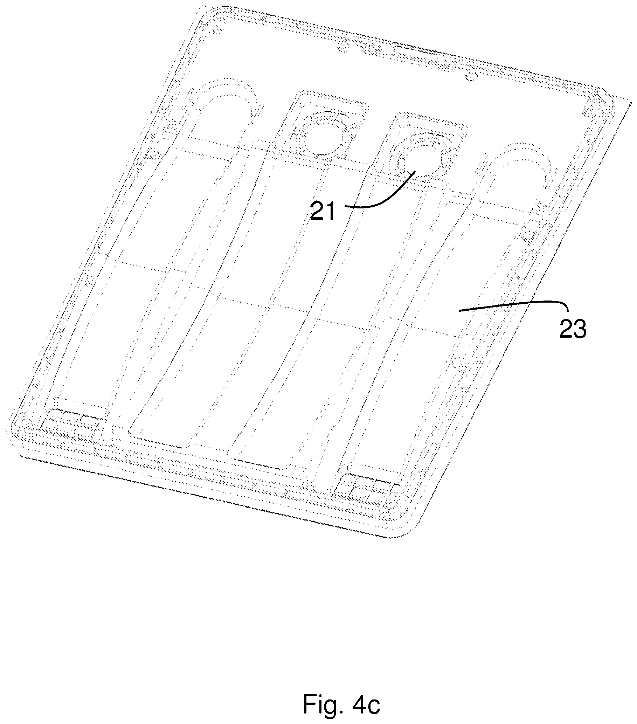

Figures 4a, 4b and 4c show section of the intermediate wall 2 for improved understanding of the construction characteristics of the vent pipe elements.

It will be understood that the direction of rotation of the fans 24 may set the direction of the air flow, whereas the speed of rotation of the fans 24 will control the cooling rate of the product in the section 111.

For this reason, a fan actuation and adjustment unit 24 is provided, which communicates with a temperature sensing unit.

Particularly, the temperature sensing unit comprises means for sensing air temperature at the upper opening 21 and/or the lower opening 22.

According to a preferred embodiment, the temperature sensing unit comprises:
- a rpm meter for each fan 24
- a thermometer for each fan 24 for measuring temperature at each fan 24
- one or more hygrometers for measuring moisture in the air at the fans 24.

Here, the temperature sensing unit is integrated in the intermediate wall 2.

In a possible embodiment, the fan actuation and adjustment unit 24 may be integrated in the intermediate wall 2 and comprise the temperature sensing unit therein.

Therefore, the intermediate wall 2 may have an intelligent portion for the actuation and adjustment unit, which may have a self-standing operation, simply based on the detected temperature.

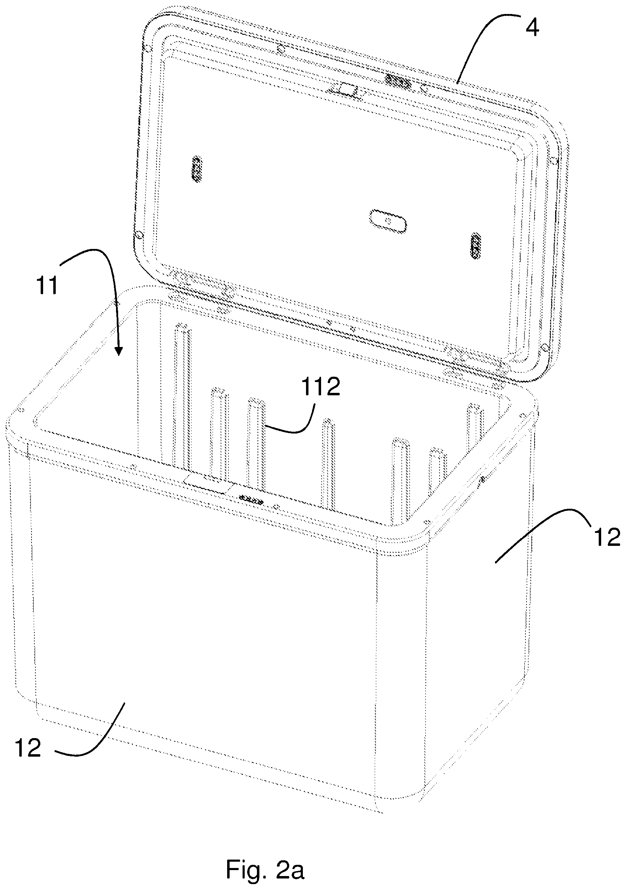

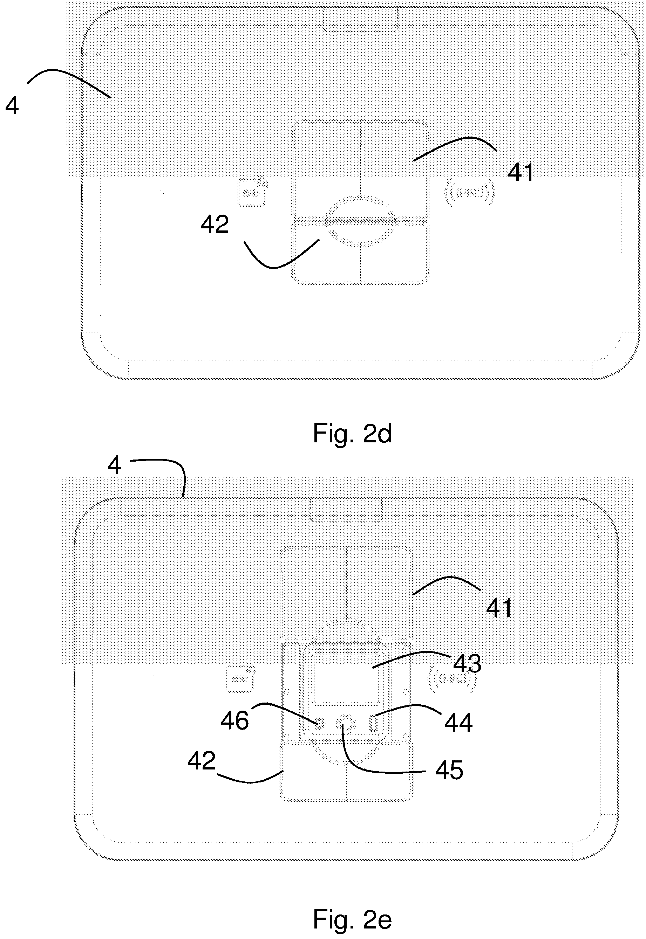

Nevertheless, in a preferred embodiment, the smart portion of the intermediate wall 2 may communicate with a smart portion on a cover 4 of the container, as shown in Figures 2a, 2d and 2e.

The smart portion of the cover 4 has a control and management unit that communicates with the actuation and adjustment unit.

The control and management unit has a user interface comprising a display for the user to enter the operating settings.

Figures 2d and 2e show the top of the cover 4, comprising a door composed of two parts 41 and 42 which can be moved toward and away from each other for access to the display 43.

A USB port 44, a power socket 45 and the power button 46 for the display 43 may be provided below the display 43.

The power socket 45 may be provided in combination with rechargeable batteries, which can be placed both in the intermediate wall 2 and in the cover 4 and may be recharged through the power socket 45.

Furthermore, the cover 4 may include various devices both for communication of the parameters recorded by the cover 4 and for interaction of the cover 4 with any users.

Therefore, the cover may have accelerometers, inertial sensors, RFID, NFC, Bluetooth devices, GPS or GSM devices, SD memory cards, data encryption cards, cryptochips etc., integrated therein.

User recognition and authorization means may be further provided such as smart card readers or the like.

Furthermore, the cover 4 may include means for recognizing the goods in the housing compartment.

The means for recognizing goods may consist, for example of an optical instrument or barcode reader, connected to the USB port 44, or means integrated in the cover 4, as for example NFC, RFID, Bluetooth devices cooperating with corresponding tags on the products in the housing compartment.

In one improvement, temperature sensing means may be provided in the cover 4 for sensing the temperature in the housing compartment 11, such as IR temperature sensors.

Finally, in a further embodiment a light sensing sensor may be provided, which is adapted to determine whether the container is actually closed.

All the parts integrated in the cover as discussed herein are not shown in the figures for simplicity, but it will be understood that these parts, composed of electronic cards, may be easily inserted into the cover structure 4 in the manner and according to the knowledge of the prior art.

## Claims

1. A container for transport of biological samples or other materials, such as drugs, vaccines, blood transfusion bags and vials in general or other perishable goods such as food or beverages under controlled temperature, which container comprises a housing compartment (11) for goods, said housing compartment (11) being delimited by one or more side walls (12) and having at least one opening,
at least one intermediate wall (2) being provided inside said housing compartment (11) and is adapted to divide said housing compartment (11) into at least two sections (110, 111),
**characterized in that**
said intermediate wall (2) has at least one vent pipe element comprising an upper opening (21) connected to a lower opening (22) through a duct (23), such that the lower opening (22) communicates with one section (110) and the upper opening (21) communicates with the other section (111),
said vent pipe element comprising at least one fan (24) adapted to create a forced-air flow from the upper opening (21) to the lower opening (22) and vice versa, such that said forced-air flow provides constant temperatures for the samples while they are being transported.

2. A container as claimed in claim 1, wherein at least one heat-absorbing device is provided, such as eutectic plates or the like, which is placed in either section.

3. A container as claimed in claim 1, wherein said intermediate wall (2) has at least two vent pipe elements, such that the upper opening (21) of one vent pipe element will communicate with the section (111), with which section (111) the lower opening (22) of the other vent pipe element communicates.

4. A container as claimed in claim 1, wherein an actuation and adjustment unit is provided to actuate and adjust said fan (24), said actuation and adjustment unit communicating with a temperature sensing unit.

5. A container as claimed in claim 4, wherein said temperature sensing unit comprises means for sensing air temperature at the upper opening (21) and/or the lower opening (22).

6. A container as claimed in claim 1, wherein a cover (4) is provided, which is adapted to close said opening, which cover (4) has a control and management unit, which control and management unit communicates with the said actuation and adjustment unit.

7. A container as claimed in claim 6, wherein said cover (4) comprises means for recognizing the goods within said housing compartment (11).

8. A container as claimed in claim 6, wherein said cover (4) has temperature sensing means for sensing the temperature in said housing compartment (11).

9. A container as claimed in claim 1, wherein a system is provided for safely opening/closing said housing compartment (11), which system comprises authentication means using codes contained in appropriate smart cards or other user recognition signals.

10. A container as claimed in claim 1, wherein a plurality of sensors are provided, which are adapted to record various transport conditions, such as temperature, sample movement, moisture, light, geographic position.

11. A container as claimed in one or more of the preceding claims, wherein means are provided for real-time transmission/reception of the data detected by the said plurality of sensors to/from at least one remote unit.

12. A container as claimed in one or more of the preceding claims, wherein at least one interface is provided for communication with one or more remote units, such that the remote units may set the operating conditions of said container.

13. A container as claimed in one or more mechanical of the preceding claims, wherein mechanical means are provided for opening/closing the housing compartment (11).

14. A container as claimed in one or more of the preceding claims, wherein at least one control unit is provided, for detecting any tamper attempt on the container.

15. A container as claimed in one or more of the preceding claims, wherein a supervision unit is provided for detecting the achievement of threshold values by the parameters detected by said plurality of sensors,
said supervision unit comprising a unit for generating alarm signals and a unit for sending said alarm signals to one or more user units.

## Patentansprüche

1. Behälter zum Transport von biologischen Proben oder anderen Materialien, wie z.B. Medikamenten, Impfstoffen, Bluttransfusionsbeuteln und -fläschchen im allgemeinen oder anderen verderblichen Gütern, wie z.B. Lebensmitteln oder Getränken bei kontrollierter Temperatur, wobei der Behälter ein Gehäusefach (11) für die Güter umfasst, wobei das Gehäusefach (11) von einer oder mehreren Seitenwänden (12) eingegrenzt ist und wenigstens eine Öffnung hat,
wenigstens eine Zwischenwand (2) innerhalb des Gehäusefachs (11) vorgesehen ist und die dazu geeignet ist, das Gehäusefach (11) in wenigstens zwei Abschnitte (110, 111) zu unterteilen,
**dadurch gekennzeichnet, dass**
die Zwischenwand (2) wenigstens ein Entlüftungsrohr-Element umfasst, das eine obere Öffnung (21) umfasst, die über einen Kanal (23) mit einer unteren Öffnung (22) in Kontakt steht, so dass die untere Öffnung (22) mit einem Abschnitt (110) und die obere Öffnung (21) mit dem anderen Abschnitt (111) in Kontakt steht,
wobei das Entlüftungsrohr-Element wenigstens ein Gebläse (24) umfasst, das dazu entwickelt wurde, einen Zwangsluftstrom von der oberen Öffnung (21) zur unteren Öffnung (22) und umgekehrt zu erzeugen, so dass der Zwangsluftstrom eine konstante Temperatur für die Proben während des Transports der Proben bereitstellt.

2. Behälter nach Anspruch 1, wobei wenigstens eine wärmeabsorbierende Vorrichtung, wie eutektische Platten oder ähnliches, vorgesehen ist, die in jedem Abschnitt angeordnet ist.

3. Behälter nach Anspruch 1, wobei die Zwischenwand (2) wenigstens zwei Entlüftungsrohr-Elemente hat, so dass die obere Öffnung (21) eines Entlüftungsrohr-Elements mit dem Abschnitt (111) in Verbindung steht, mit dem auch die untere Öffnung (22) des anderen Entlüftungsrohr-Elements in Verbindung steht.

4. Behälter nach Anspruch 1, wobei eine Auslöse- und Anpassungseinheit zum Auslösen und Anpassen des Gebläses (24) vorgesehen ist, wobei die Auslöse- und Einstelleinheit mit einer Temperaturerfassungseinheit in Verbindung steht.

5. Behälter nach Anspruch 4, wobei die Temperaturerfassungseinheit ein Mittel zum Erfassen der Lufttemperatur an der oberen Öffnung (21) und/oder der unteren Öffnung (22) beinhaltet.

6. Behälter nach Anspruch 1, wobei ein Deckel (4) vorgesehen ist, der dazu geeignet ist, die Öffnung zu verschließen, wobei der Deckel (4) eine Steuer- und Verwaltungseinheit aufweist, wobei die Steuer- und Verwaltungseinheit mit der Auslöse- und Einstelleinheit kommuniziert.

7. Behälter nach Anspruch 6, wobei der Deckel (4) ein Mittel zur Erkennung der Waren im Gehäusefach (11) umfasst.

8. Behälter nach Anspruch 6, wobei der Deckel (4) Temperaturerfassungsmittel zum Erfassen der Temperatur im Gehäusefach (11) aufweist.

9. Behälter nach Anspruch 1, bei dem ein System zum sicheren Öffnen/Schließen des Gehäusefachs (11) vorgesehen ist, das Authentifizierungsmittel umfasst, die unter Benutzung von Codes, die in geeigneten Chipkarten enthalten sind, oder anderen Signalen zur Erkennung des Benutzers arbeiten.

10. Behälter nach Anspruch 1, bei dem mehrere Sensoren vorgesehen sind, die dazu geeignet sind, verschiedene Transportbedingungen aufzuzeichnen, wie z.B. Temperatur, Probenbewegung, Feuchtigkeit, Licht, geographische Position.

11. Behälter nach einem oder mehreren der vorhergehenden Ansprüche, wobei Mittel zur Echtzeitübertragung/zum Echtzeitempfang der von den mehreren Sensoren erfassten Daten an/von mindestens einer ferngesteuerten Einheit vorgesehen sind.

12. Behälter nach einem oder mehreren der vorhergehenden Ansprüche, wobei wenigstens eine Schnittstelle zur Kommunikation mit einer oder mehreren ferngesteuerten Einheiten vorgesehen ist, so dass die ferngesteuerten Einheiten in der Lage sind die Betriebsbedingungen des Behälters einzustellen.

13. Behälter nach einem oder mehreren mechanischen der vorhergehenden Ansprüche, wobei mechanische Mittel zum Öffnen/Schließen des Gehäusefachs (11) vorgesehen sind.

14. Behälter nach einem oder mehreren der vorhergehenden Ansprüche, wobei wenigstens eine Steuerungseinheit vorgesehen ist, die jegliche Manipulationsversuche an dem Behälter erkennt.

15. Behälter nach einem oder mehreren der vorhergehenden Ansprüche, wobei eine Überwachungseinheit vorgesehen ist, um das Erreichen von Schwellenwerten durch die von den mehreren Sensoren erfassten Parameter zu erkennen,
wobei die Überwachungseinheit eine Einheit zur Erzeugung von Alarmsignalen und eine Einheit zum Versenden der Alarmsignale an eine oder mehrere Benutzereinheiten umfasst.

## Revendications

1. Récipient pour le transport d'échantillons biologiques ou d'autres matériaux, tels que des médicaments, des vaccins, des poches et des flacons de transfusion sanguine en général ou d'autres biens périssables tels que des aliments ou des boissons à température contrôlée, récipient qui comprend un compartiment de logement (11) pour des biens, ledit compartiment de logement (11) étant délimité par une ou plusieurs parois latérales (12) et ayant au moins une ouverture,
au moins une paroi intermédiaire (2) étant prévue à l'intérieur dudit compartiment de logement (11) et étant apte à diviser ledit compartiment de logement (11) en au moins deux sections (110, 111),
**caractérisé en ce que**
ladite paroi intermédiaire (2) comporte au moins un élément de tuyau d'aération comprenant une ouverture supérieure (21) reliée à une ouverture inférieure (22) par l'intermédiaire d'un conduit (23), de sorte que l'ouverture inférieure (22) communique avec une section (110) et l'ouverture supérieure (21) communique avec l'autre section (111),
ledit élément de tuyau d'aération comprenant au moins un ventilateur (24) apte à créer un écoulement d'air forcé depuis l'ouverture supérieure (21) à l'ouverture inférieure (22) et vice versa, de sorte que ledit écoulement d'air forcé fournisse des températures constantes pour les échantillons pendant leur transport.

2. Récipient selon la revendication 1, dans lequel au moins un dispositif d'absorption de chaleur est prévu, tel que des plaques eutectiques ou analogues, qui est placé dans l'une des sections.

3. Récipient selon la revendication 1, dans lequel ladite paroi intermédiaire (2) comporte au moins deux éléments de tuyau d'aération, de sorte que l'ouverture supérieure (21) d'un élément de tuyau d'aération communique avec la section (111), section (111) avec laquelle l'ouverture inférieure (22) de l'autre élément de tuyau d'aération communique.

4. Récipient selon la revendication 1, dans lequel une unité d'actionnement et de réglage est prévue pour actionner et régler ledit ventilateur (24), ladite unité d'actionnement et de réglage communiquant avec une unité de détection de température.

5. Récipient selon la revendication 4, dans lequel ladite unité de détection de température comprend des moyens pour détecter la température de l'air au niveau de l'ouverture supérieure (21) et/ou de l'ouverture inférieure (22).

6. Récipient selon la revendication 1, dans lequel un couvercle (4) est prévu, qui est apte à fermer ladite ouverture, couvercle (4) qui a une unité de commande et de gestion, qui communique avec ladite unité d'actionnement et de réglage.

7. Récipient selon la revendication 6, dans lequel ledit couvercle (4) comprend des moyens de reconnaissance des biens à l'intérieur dudit compartiment de logement (11).

8. Récipient selon la revendication 6, dans lequel ledit couvercle (4) comporte des moyens de détection de température pour détecter la température à l'intérieur dudit compartiment de logement (11).

9. Récipient selon la revendication 1, dans lequel un système est prévu pour ouvrir/fermer en toute sécurité ledit compartiment de logement (11), système qui comprend des moyens d'authentification utilisant des codes contenus dans des cartes à puce appropriées ou d'autres signaux de reconnaissance de l'utilisateur.

10. Récipient selon la revendication 1, dans lequel une pluralité de capteurs sont prévus, qui sont aptes à enregistrer diverses conditions de transport, telles que la température, le mouvement de l'échantillon, l'humidité, la lumière, la position géographique.

11. Récipient selon l'une ou plusieurs des revendications précédentes, dans lequel des moyens sont prévus pour l'émission/réception en temps réel des données détectées par ladite pluralité de capteurs vers/depuis au moins une unité distante.

12. Récipient selon l'une ou plusieurs des revendications précédentes, dans lequel au moins une interface est prévue pour la communication avec une ou plusieurs unités distantes, de sorte que les unités distantes puissent établir les conditions de fonctionnement dudit récipient.

13. Récipient selon l'une ou plusieurs des revendications précédentes, dans lequel des moyens mécaniques sont prévus pour ouvrir/fermer le compartiment de logement (11).

14. Récipient selon l'une ou plusieurs des revendications précédentes, dans lequel au moins une unité de commande est prévue, pour détecter toute tentative de viol sur le récipient.

15. Récipient selon l'une ou plusieurs des revendications précédentes, dans lequel une unité de supervision est prévue pour détecter l'obtention de valeurs de seuil de la part des paramètres détectés par ladite pluralité de capteurs, ladite unité de supervision comprenant une unité pour la génération de signaux d'alarme et une unité pour l'envoi desdits signaux d'alarme à une ou plusieurs unités d'utilisateur.
